# EUROPEAN PATENT SPECIFICATION

(11) **EP 1 638 334 B1**
(45) Date of publication and mention of the grant of the patent: **11.08.2010**
(21) Application number: 04292240.1
(22) Date of filing: 16.09.2004
(51) Int. Cl.: H04N 7/24

(54) **Zapping agent with improved latency**
Abknallendmittel mit verbesserter Latenz
Agent de zapping avec latence améliorée

(43) Date of publication of application: 22.03.2006
(73) Proprietor: Alcatel USA Sourcing, L.P., Plano, Texas 75075 (US)
(72) Inventor: Vermeiren, Tim, 9240 - Zele (BE); Borghs, Eric Frans Elisa, 2440 - Geel (BE); Badt, Sig Harold, Richardson, Texas 75081 (US)
(74) Representative: Narmon, Gisèle Marie Thérèse

(56) References cited:
- EP-A- 1 185 087
- WO-A-03/088646
- US-B1- 6 591 013
- US-B1- 6 728 965

## Description

The present invention relates to a zapping agent comprising:
- a first receiving means adapted to receive a request from a particular user whereby a particular video stream is requested,
- a second receiving means adapted to receive said particular video stream from a video source,
- a backlogging means coupled to said second receiving means, and adapted to backlog, into a first-in-first-out-structured memory, one first anchor frame and further delta frames, of one first group of pictures of said particular video stream,
- a channel transmitting means coupled to said first receiving means, to said second receiving means and to said first-in-first-out-structured memory, and adapted, upon receipt of said request, to transmit a plurality of video frames from said first-in-first-out-structured memory towards said particular user, said plurality of video frames comprising said one first anchor frame as first transmitted element, and at least one further delta frame.

The bandwidth towards Customer Premises (CP) is usually too small to carry more than a few video channels. All channels are only available at a multicast (or distribution) point, e.g. at an edge device (or access device), which users are connected to, or at a video server further in the network. The multicast point only forwards one or more channels, which the user asked for.

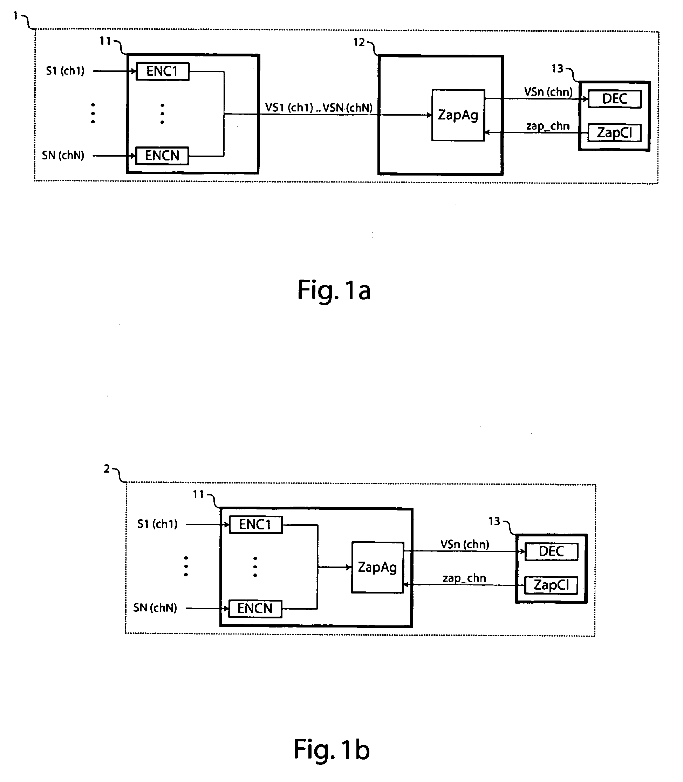

Fig. 1a depicts a data communication system 1 comprising a video server 11, an edge device 12, and Customer Premises Equipment (CPE) 13 at a particular user location.

The edge device 12 provides access, and aggregates user traffic, towards the video server 11. The edge device 12 is for instance an access multiplexer, such as a Digital Subscriber Line Access Multiplexer (DSLAM), or a bridge, such as an Ethernet bridge, or a router, such as an Internet Protocol (IP) router, or a switch, such as an Asynchronous Transfer Mode (ATM) switch.

The video server 11 accommodates encoding means ENC1 to ENCN to encode N analog or digital video signals S1 to SN, representing N video channels ch1 to chN respectively, into video frames, thereby yielding N video streams (or video flows) VS1 to VSN. The video stream VS1 to VSN are all forwarded towards the edge device 12 for further transmission towards users.

CPE 13 accommodate a decoding means DEC for decoding and displaying any of the video streams VS1 to VSN.

The edge device 12 accommodates a zapping agent ZapAg that controls which particular channel is to be transmitted to which particular user.

CPE 13 accommodates a zapping client ZapCl that interfaces with the zapping agent ZapAg. The zapping client ZapCl sends a zap signal zap_chn to the zapping agent ZapAg, whereby a particular video stream VSn (1 ≤ n≤ N) is requested. Thereupon, the zapping agent ZapAg forwards the corresponding video stream VSn towards CPE 13.

Fig. 1b depicts a data communication system 2, wherein video streams VS1 to VSN are only available at the video server 11. In this configuration, the video server 11 accommodates the zapping agent for controlling delivery of video streams towards users, possibly through intermediate network equipment.

Inter-frame encoding is used to reduce the encoded bit rate while maintaining an acceptable picture quality by coding the pictures with reference to previous and/or subsequent encoded pictures. An example of video encoding using inter-frame encoding is MPEG2.

In a motion sequence, individual frames are grouped together (called a Group of Pictures or GoP). A GoP comprises one anchor frame (or intra-frame, or I frame) as first initial element, and further delta frames (or inter-frames) that ultimately relate to this anchor frame.

Anchor frames are encoded without referencing other pictures, e.g. by reducing the spatial redundancy in the picture. Delta frames are encoded by means of forward and/or backward prediction techniques such as motion compensation, and do refer other pictures, thereby achieving a higher compression ratio. Examples of delta frames are predictive frames (or P frames), which are encoded with reference to the previous I or P frame, and bidirectional interpolative frames (or B frames), which are encoded with reference to both the previous and the next I or P frame.

As an example, a typical GoP is a sequence of video frames of the form I B B P B B P B B P.

It is to be noticed that video frames are usually transmitted in a different order than the display order so as to make the decoding causal and faster.

Referring to the previous example, the GoP will be transmitted as I P BBPBBPBB.

It is to be also noticed that a frame may also relate to a frame of another GoP (open GoP versus closed GoP).

Referring to the previous example, the video sequence I B B P B B P B B P forms a closed GoP.

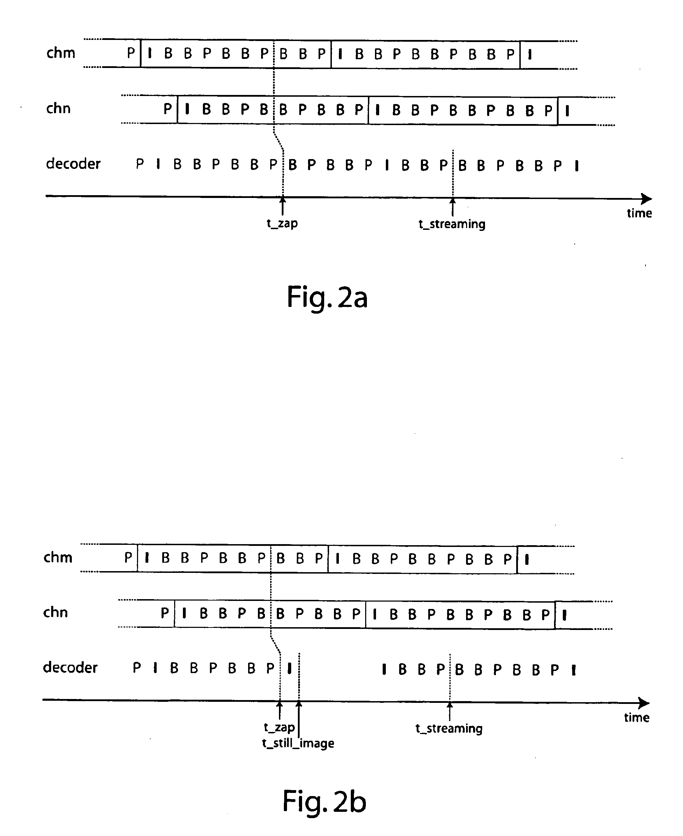

Fig. 2a depicts a time-line representation of 2 video streams VSm (1 ≤ m ≤ N, m ≠ n) and VSn.

When a user initiates a channel change from channel chm to channel chn, the multicast point stops sending frames of the prior channel, and starts sending frames of the new channel (see t_zap in fig. 2a).

When the zap signal is sent, the CPE typically flushes its decoding buffer and waits for new frames. The first frame the decoder receives is likely not to be an anchor frame, thereby making decoding impossible until a new anchor frame is received. Thereupon, the decoder shall still wait for a sufficient number of frames to be received before displaying the new channel (see t_streaming in fig. 2a). Therefore, the time between t_zap and t_streaming can be significantly higher than the time of 1 GOP, giving the user a slow-responding zapping experience.

An optimization to this zapping procedure is known from the art, and is depicted in fig. 2b. It consists of caching the last-forwarded anchor frame at the multicast point, and transmitting the so-cached anchor frame upon the zap signal. The decoder at the CPE will then quickly receive and decode this I frame (see t_still_image in fig. 2b). While a new GoP is awaited for, a still image is displayed of the single decoded I frame. This results in an improved user experience because the user already sees the new channel albeit in a still image.

US patent 6,728,965 discloses a rapid channel changer (or zapping agent) adapted to backlog, into a first-in-first-out cache memory, one first anchor frame and further delta frames of one first GoP of a particular video stream (or video channel) and, upon request of that channel from a particular user (channel change request), to start transmitting a plurality of cached video frames from the cache memory towards the particular user, which transmission being resumed from the first anchor frame onwards (the position of which in the first-in-first-out memory is held by a pointer), thereby improving zapping latency.

It is an object of the present invention to further improve the system latency and the user experience.

According to the invention, this object is achieved due to the fact that said channel transmitting means is further adapted thereupon, when one second anchor frame, of one second group of pictures of said particular video stream subsequently contiguous to said one first group of picture, has been received from said video source, to stop transmitting video frames from said first-in-first-out-structured memory towards said particular user, and to switch said particular user towards a single multicast resource that broadcasts said particular video stream towards multiple users.

The GoP that is currently being forwarded is not necessarily the GoP that is currently being transmitted, depending on the extent to which video frames are buffered before being actually transmitted.

The zapping agent caches the last-forwarded GoP into memory, and upon receipt of the zap signal, resumes transmission from the first frame of that GoP onwards.

As soon as a new anchor frame is available for further forwarding, the zapping agent stops transmitting frames from the cache memory, and starts forwarding (or broadcasting) the real stream. This may result in a small mismatch (visual glitch) as the zap signal is an asynchronous event.

Yet, by so doing, the decoder can start displaying moving pictures of the new channel faster, thereby improving the system latency and the user experience.

The zapping agent resumes transmission of the last video sequence of a channel whenever a user asked for that channel, before smoothly switching towards real streaming, that is to say before switching towards a single multicast resource that broadcasts a single video stream towards multiple users, irrespective of the time those users were switched to that channel, and without the need for user-dedicated forwarding process, making this solution highly scalable.

It is to be noticed that a few cached frames may not be decoded, or may be decoded improperly, since a fraction only of the first GoP may be available at the decoder (e.g., a B frame cannot be decoded if the next P frame is missing).

Further characterizing embodiments of a zapping unit are mentioned in the appended claims.

The present invention also relates to a method for transmitting video content, and comprising the steps of:
- receiving a request from a particular user whereby a particular video stream is requested,
- receiving said particular video stream from a video source,
- backlogging, into a first-in-first-out-structured memory, one first anchor frame and further delta frames of one first group of pictures of said particular video stream,
- upon receipt of said request, transmitting a plurality of video frames from said first-in-first-out-structured memory towards said particular user, said plurality of video frames comprising said one first anchor frame as first transmitted element, and at least one further delta frame.

A method according to the invention further comprises the steps of thereupon, when one second anchor frame, of one second group of pictures of said particular video stream subsequently contiguous to said one first group of picture, has been received from said video source, stopping transmission of video frames from said first-in-first-out-structured memory towards said particular user, and switching said particular user towards a single multicast resource that broadcasts said particular video stream towards multiple users.

Embodiments of a method according to the invention correspond with the embodiments of a zapping agent according to the invention.

It is to be noticed that the term 'comprising', also used in the claims, should not be interpreted as being restricted to the means listed thereafter. Thus, the scope of the expression 'a device comprising means A and B' should not be limited to devices consisting only of components A and B. It means that with respect to the present invention, the relevant components of the device are A and B.

Similarly, it is to be noticed that the term 'coupled', also used in the claims, should not be interpreted as being restricted to direct connections only. Thus, the scope of the expression 'a device A coupled to a device B' should not be limited to devices or systems wherein an output of device A is directly connected to an input of device B, and/or vice-versa. It means that there exists a path between an output of A and an input of B, and/or vice-versa, which may be a path including other devices or means.

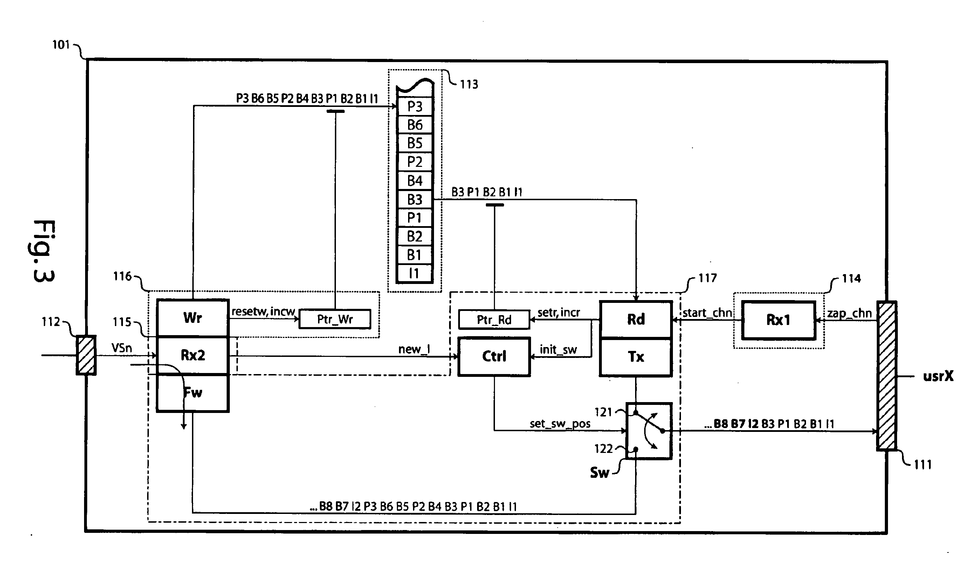

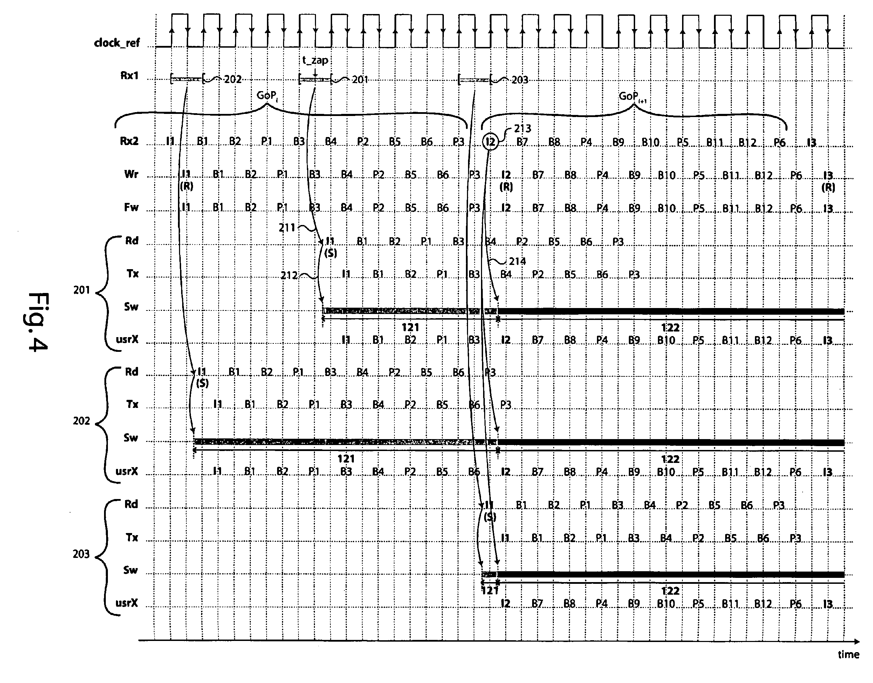

The above and other objects and features of the invention will become more apparent and the invention itself will be best understood by referring to the following description of an embodiment taken in conjunction with fig. 3 and 4 wherein:
- fig. 3 is a functional representation of a zapping agent according to the invention,
- fig. 4 is a timeline representation of various noticeable data flows within the zapping agent and at the CPE.
   Fig. 3 depicts a zapping agent 101 comprising:
- a first communication port 111, to which a particular user usrX is coupled,
- a second communication port 112, to which a video source is coupled,
- a First-In-First-Out (FIFO) cache memory 113,
- a first receiving means Rx1 (or 114), interfacing via the first communication port 111 with a zapping client at user usrX's location,
- a second receiving means Rx2 (or 115), interfacing via the second communication port 112 with the video source,
- a backlogging means 116,
- a channel transmitting means 117.

In a preferred embodiment of the present invention, the zapping agent 101 forms part of a DSLAM.

The first receiving means Rx1 is coupled to the first communication port 111 and to the channel transmitting means 117. The second receiving means Rx2 is coupled to the second communication port 112, to the backlogging means 116 and to the channel transmitting means 117. The backlogging means 116 is further coupled to the cache memory 113. The channel transmitting means 117 is further coupled to the cache memory 113 and to the first communication port 111.

The backlogging means 116 comprises a writing module Wr, which makes use of a write pointer Ptr_Wr for writing video frames into the cache memory 113.

The writing module Wr is coupled to the second receiving means Rx2 and to the cache memory 113.

The channel transmitting means 117 comprises:
- a reading module Rd, which makes use of a read pointer Ptr_Rd for reading video frames from the cache memory 113,
- a transmitting module Tx,
- a forwarding module Fw,
- a control module Ctrl,
- a uni-directional switch Sw.

The reading module Rd is coupled to the first receiving means Rx1, to the transmitting module Tx, to the control module Ctrl and to the cache memory 113. The control module Ctrl is further coupled to the switch Sw and to the second receiving means Rx2. The first switch position 121 is coupled to the transmitting module Tx, the second switch position 122 is coupled to the forwarding module Fw, the switch output is coupled to the first communication port 111. The forwarding module Fw is further coupled to the second receiving means Rx2.

The first receiving means Rx1 is adapted to receive a zap signal from the zapping client, whereby a new channel is asked for (see zap_chn in fig. 3). Thereupon, the first receiving means Rx1 triggers the channel transmitting means 117 to start transmission of the new channel towards user usrX (see start_chn in fig. 3).

The second receiving means Rx2 is adapted to receive video frames of the new channel from a video source. Video frames are made available to the writing module Wr and to the forwarding module Fw. The writing module Wr is further instructed whether the new available frame is an anchor frame or not, while the control module Ctrl is notified that a new anchor frame within the video stream VSn is available for further forwarding (see new_I in fig. 3).

The writing module Wr is adapted to backlog the last-forwarded GoP into the cache memory 113. Upon receipt of a new anchor frame from the second receiving means Rx2, the writing module Wr resets the pointer Ptr_Wr to the first element of the cache memory 113 (see resetw in fig. 3). Then, the pointer Ptr_Wr is incremented whenever a write operation completes (see incw in fig. 3).

The reading module Rd is adapted to read video frames from the cache memory 113, and to make them available to the transmitting module Tx for further transmission towards user usrX. Upon trigger from the first receiving means Rx1 (see start_chn in fig. 3), the reading module Rd sets the pointer Ptr_Rd to the first element of the cache memory associated the new channel (see setr in fig. 3). Then, the pointer Ptr_Rd is incremented whenever a read operation completes (see incr in fig. 3). The reading module Rd is further adapted to trigger the control module Ctrl to set the switch Sw into position 121 (see init_sw in fig. 3), thereby allowing video frames to be transmitted from the cache memory 113 towards user usrX.

The operation of the writing module Wr and the reading module Rd shall be synchronized in order to preserve memory integrity.

The forwarding module Fw is adapted to get video frames from the second receiving means Rx2, and to forward them towards the switch position 122.

The transmitting module Tx is adapted to get video frames from the reading module Rd, and to transmit them towards the switch position 121.

The control module Ctrl is adapted to control the switch Sw (see set_sw_pos in fig. 3). More specifically, the control module Ctrl sets the switch Sw into position 121 upon trigger from the reading module Rd when a new channel is asked for (see init_sw in fig. 3), and sets the switch Sw into position 122 upon trigger from the second receiving means Rx2 when a new anchor frame is available for further forwarding (see new_I in fig. 3).

The operation of the forwarding module Fw, the transmitting module Tx and the switch Sw shall be synchronized so as to avoid frame corruption, and to minimize the jitter of the output video stream.

An operation of the zapping agent 101 follows with reference to both fig. 3 and 4.

In a preferred embodiment of the present invention, the second receiving means Rx2, the writing module Wr, the reading module Rd, the forwarding module Fw, the transmitting module Tx and the control module Ctrl are supplied with a reference clock clock_ref that matches the frame rate of the requested video stream (typically 24 or 30 frames-per-second or fps).

More specifically:
- the second receiving means Rx2 makes the lastly received video frame available to the writing module Wr and to the forwarding module Fw on a rising edge of the clock signal clock_ref,
- the writing module Wr writes video frames into the cache memory 113 on the falling edges of the clock signal clock_ref, while the reading module Rd reads video frames from the cache memory 113 on the rising edges of the clock signal clock_ref, thereby preserving memory integrity,
- the forwarding module Fw and the transmitting module Tx transmit video frames towards the switch Sw on the falling edges of the clock signal clock_ref, thereby minimizing jitter when the switch Sw is moved from position 121 to position 122,
- the control module Ctrl switches the switch Sw sufficiently away from the falling edges of the clock signal clock_ref, thereby avoiding frame corruption.

The 'reset pointer Ptr_Wr' and 'set pointer Ptr_rd' events have been depicted in fig. 4 as (R) and (S) respectively, along the Wr and Rd timelines respectively.

Suppose user usrX switches to channel chn. The zapping client sends a zap signal zap_chn to the zapping agent 101, whereby channel chn is requested. The zap signal zap_chn is received by the first receiving means Rx1 at time t_zap, and while GoP GoPᵢ is being forwarded, immediately followed by GoPs GoPᵢ₊₁, GoP_{i+2'} and so on.

In a preferred embodiment of the present invention, video channel chn is encoded into video sequences of the form I B B P B B P B B P.

GoPᵢ comprises video frames I1 B1 B2 P1 B3 B4 P2 B5 B6 P3, GoPᵢ₊₁ comprises video frames I2 B7 B8 P4 B9 B10 P5 B11 B12 P6, and so on, where:
- I1 and I2 are I-frames,
- P1 to P6 are P-frames,
- B1 to B12 are B-frames.

The present description would remain valid if another sequence and/or other frame types were used.

The video frames 11, B1, B2, etc, are received and made available at the rising edges of the clock signal clock_ref (see Rx2 timeline in fig. 4).

Video frames are pushed into the cache memory 113 and forwarded up to the switch position 122, which is at the time being not selected (see Wr and Fw time lines in fig. 4).

Upon receipt of the zap signal zap_chn, the first receiving means Rx1 triggers the reading module Rd (see start_chn in fig. 3, and 211 in fig. 4) to start reading and transmitting the video sequence from the cache memory.

Beforehand or concurrently, the reading module Rd triggers the control module Ctrl (see init_sw in fig. 3, and 212 in fig. 4) to set the switch Sw to position 121 (see Sw timeline in fig. 4).

Then, the reading module Rd starts reading frames from the cache memory 113. Frames are made available to the transmitting module Tx, which transmits them through switch position 121 towards user usrX (see Rd, Tx, Sw and usrX timelines in fig. 4).

When the new anchor frame I2 is available for further forwarding (see 213 in fig. 4), the second receiving means Rx2 triggers the control module Ctrl (see new_I in fig. 3, and 214 in fig. 4), which in turn switches the switch Sw into position 122 (see set_sw_pos in fig. 3). Next, the second receiving means Rx2 makes the new anchor frame available to the forwarding module Fw for further transmission. The forwarding module Fw forwards that frame, and subsequent frames thereof, through switch position 122 towards user usrX (see Rx2, Fw , Sw and usrX timelines in fig. 4).

The reading module Rd and the transmitting module Tx may either stop transmitting new frames from the cache memory, or, as it is the case for that preferred embodiment, keep on reading and transmitting video frames towards switch position 121, which is de-facto no longer selected.

If t_zap occurs within the time-interval 201, the decoding means at user usrX's location will receive the video stream I1 B1 B2 P1 B3 I2 B7 B8 etc. The decoding means will then display a few moving pictures of the cached video sequence before displaying the real stream. The decoding means will not be able to decode B4 frame since that frame is predicted from both P1 and P2, the latter being missing.

If t_zap occurs within the time-interval 202, the decoding means will receive the video stream I1 B1 B2 P1 B3 B4 P2 B5 B6 I2 B7 B8 etc. The decoding means will display more frames of the cached video sequence before displaying the real stream, making the transition even smoother.

If t_zap occurs within the time-interval 203, the switch Sw will be switched to position 122 before the transmitting module Tx transmits the first frame. In such a case, the decoding means will not get any frame from the cache memory, and will be immediately supplied with the real stream.

While, for convenience purpose, video streams have been depicted on their respective timeline in the display order, it should be understood that the actual transmit order may be (and is likely to be) different. Yet, this will not change the system response time, as observed by user usrX.

In an alternative embodiment of the present invention, the zapping unit 101 forms part of a video server. If so, the port 111 would stand for an internal communication port towards a co-located encoding means, and the second receiving means Rx2 would be reduced to the basic function of getting and passing video frames, e.g. by means of a shared memory, to the backlogging means 116 and to the channel transmitting means 117, and as such might be combined with one or both of them.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is made only by way of example and not as a limitation on the scope of the invention, as defined in the appended claims.

## Claims

1. A zapping agent (101) comprising:
- a first receiving means (114) adapted to receive a request (zap_chn) from a particular user (usrX) whereby a particular video stream (VSn) is requested,
- a second receiving means (115) adapted to receive said particular video stream from a video source (ENCn),
- a backlogging means (116) coupled to said second receiving means, and adapted to backlog, into a first-in-first-out-structured memory (113), one first anchor frame (I1) and further delta frames (B1, B2, P1, B3, B4, P2, B5, B6, P3), of one first group of pictures (GoPᵢ) of said particular video stream,
- a channel transmitting means (117) coupled to said first receiving means, to said second receiving means and to said first-in-first-out-structured memory, and adapted, upon receipt of said request, to transmit a plurality of video frames (11, B1, B2, P1, B3) from said first-in-first-out-structured memory towards said particular user, said plurality of video frames comprising said one first anchor frame as first transmitted element, and at least one further delta frame (B1, B2, P1, B3),
***characterized in that*** said channel transmitting means is further adapted thereupon, when one second anchor frame (I2), of one second group of pictures (GoPᵢ₊₁) of said particular video stream subsequently contiguous to said one first group of picture, has been received from said video source, to stop transmitting video frames from said first-in-first-out-structured memory towards said particular user, and to switch said particular user towards a single multicast resource that broadcasts said particular video stream towards multiple users.

2. A zapping agent according to claim 1, ***characterized in that*** said zapping unit forms part of an access multiplexer (12).

3. A zapping agent according to claim 1, ***characterized in that*** said zapping unit forms part of a video server (11).

4. A method for transmitting video content, and comprising the steps of:
- receiving a request (zap_chn) from a particular user (usrX) whereby a particular video stream (VSn) is requested,
- receiving video frames of said particular video stream (I1, B1, B2, P1, B3, B4, P2, B5, B6, P3, I2, B7, B8, etc) from a video source (ENCn),
- backlogging, into a first-in-first-out-structured memory (113), one first anchor frame (I1) and further delta frames (B1, B2, P1, B3, B4, P2, B5, B6, P3) of one first group of pictures (GoPᵢ) of said particular video stream,
- upon receipt of said request, transmitting a plurality of video frames (I1, B1, B2, P1, B3) from said first-in-first-out-structured memory towards said particular user, said plurality of video frames comprising said one first anchor frame as first transmitted element, and at least one further delta frame (B1, B2, P1, B3),
***characterized in that*** said method further comprises the step of thereupon, when one second anchor frame (12), of one second group of pictures (GoPᵢ₊₁) of said particular video stream subsequently contiguous to said one first group of picture, has been received from said video source, stopping transmission of video frames from said first-in-first-out-structured memory towards said particular user, and switching said particular user towards a single multicast resource that broadcasts said particular video stream towards multiple users.

## Patentansprüche

1. Ein Zapping-Agent (101), umfassend:
- Ein erstes Empfangsmittel (114), ausgelegt für den Empfang einer Anforderung (zap_chn) von einem bestimmten Nutzer (usrX), wobei ein bestimmter Videostrom (VSn) angefordert wird,
- ein zweites Empfangsmittel (115), ausgelegt für den Empfang des besagten Videostroms von einer Videoquelle (ENCn),
- eine Sammeleinrichtung (116), welche an das besagte zweite Empfangsmittel gekoppelt und dazu ausgelegt ist, einen ersten Ankerrahmen (I1) und weitere Delta-Rahmen (B1, B2, P1, B3, B4, P2, B5, B6, P3) einer ersten Gruppe von Bildern (GoP₁) des besagten Videostroms in einem First-In/First-Out-Speicher (113) anzusammeln,
- eine Kanalübertragungseinrichtung (117), welche an das besagte erste Empfangsmittel, an das besagte zweite Empfangsmittel und an den besagten First-In/First-Out-Speicher gekoppelt und dazu ausgelegt ist, nach Empfang der besagten Anforderung eine Mehrzahl von Videorahmen (I1, B1, B2, P1, B3) von dem besagten First-In/First-Out-Speicher an den besagten bestimmten Nutzer zu übertragen, wobei die besagte Mehrzahl von Videorahmen den besagten ersten Ankerrahmen als zuerst übertragenes Element und mindestens einen weiteren Delta-Rahmen (B1, B2, P1, B3) umfasst,
***dadurch gekennzeichnet, dass*** das besagte Kanalübertragungsmittel weiterhin dazu ausgelegt ist, daraufhin, wenn ein zweiter Ankerrahmen (I2) einer zweiten Gruppe von Bildern (GoPᵢ₊₁) des besagten bestimmten Videostroms, welcher direkt auf die besagte erste Gruppe von Bildern folgt, von der besagten Videoquelle empfangen wurde, die Übertragung von Videorahmen von dem besagten First-In/First-Out-Speicher an den besagten bestimmten Nutzer abzubrechen und den besagten bestimmten Nutzer auf eine einzelne Multicast-Ressource, welche den besagten bestimmten Videostrom an mehrfache Nutzer ausstrahlt, umzuschalten.

2. Ein Zapping-Agent nach Anspruch 1, ***dadurch gekennzeichnet, dass*** die besagte Zapping-Einheit Teil eines Zugangsmultiplexers (12) ist.

3. Ein Zapping-Agent nach Anspruch 1, ***dadurch gekennzeichnet, dass*** die besagte Zapping-Einheit Teil eines Videoservers (11) ist.

4. Ein Verfahren zum Übertragen eines Videoinhalts, und die folgenden Schritte umfassend:
- Empfangen einer Anforderung (zap_chn) von einem bestimmten Nutzer (usrX), wobei ein bestimmter Videostrom (VSn) angefordert wird,
- Empfangen von Videorahmen des besagten bestimmten Videostroms (I1, B1, B2, P1, B3, B4, P2, B5, B6, P3, I2, B7, B8, usw.) von einer Videoquelle (ENCn),
- Ansammeln eines ersten Ankerrahmens (I1) und weiterer Delta-Rahmen (B1, B2, P1, B3, B4, P2, B5, B6, P3) einer ersten Gruppe von Bildern (GoP₁) des besagten Videostroms in einem First-In/First-Out-Speicher (113),
- nach Empfang der besagten Anforderung, Übertragen einer Mehrzahl von Videorahmen (I1, B1, B2, P1, B3) von dem besagten First-In/First-Out-Speicher an den besagten bestimmten Nutzer, wobei die besagte Mehrzahl von Videorahmen den besagten ersten Ankerrahmen als zuerst übertragenes Element und mindestens einen weiteren Delta-Rahmen (B1, B2, P1, B3) umfasst,
***dadurch gekennzeichnet, dass*** das besagte Verfahren den Schritt umfasst, daraufhin, wenn ein zweiter Ankerrahmen (I2) einer zweiten Gruppe von Bildern (GoPᵢ₊₁) des besagten bestimmten Videostroms, welcher direkt auf die besagte erste Gruppe von Bildern folgt, von der besagten Videoquelle empfangen wurde, die Übertragung von Videorahmen von dem besagten First-In/First-Out-Speicher an den besagten bestimmten Nutzer abzubrechen und den besagten bestimmten Nutzer auf eine einzelne Multicast-Ressource, welche den besagten bestimmten Videostrom an mehrfache Nutzer ausstrahlt, umzuschalten.

## Revendications

1. Agent de zapping (101) comprenant :
- des premiers moyens de réception (114) adaptés pour recevoir une demande (zap_chn) de la part d'un utilisateur particulier (usrX) par laquelle un flux vidéo particulier (VSn) est demandé,
- des deuxièmes moyens de réception (115) adaptés pour recevoir ledit flux vidéo particulier de la part d'une source vidéo (ENCn),
- des moyens de mise en réserve (116) connectés auxdits deuxièmes moyens de réception et adaptés pour mettre en réserve, dans une mémoire à structure FIFO (113), une première trame d'ancrage (I1) et des trames delta supplémentaires (B1, B2, P1, B3, B4, P2, B5, B6, P3) d'un premier groupe d'images (GoPᵢ) dudit flux vidéo particulier,
- des moyens d'émission de canal (117), connectés auxdits premiers moyens de réception, vers lesdits deuxièmes moyens de réception et ladite mémoire à structure FIFO, et adaptés, sur réception de ladite demande, pour émettre une pluralité de trames vidéo (I1, B1, B2, P1, B3) depuis ladite mémoire à structure FIFO en direction dudit utilisateur particulier, ladite pluralité de trames vidéo comprenant ladite première trame d'ancrage en tant que premier élément émis et au moins une trame delta supplémentaire (B1, B2, P1, B3),
***caractérisé en ce que*** lesdits moyens d'émission de canal sont en outre adaptés pour, là-dessus, lorsqu'une deuxième trame d'ancrage (I2) d'un deuxième groupe d'images (GoP₁₄₋₁) dudit flux vidéo particulier postérieurement contigu audit premier groupe d'images a été reçue de ladite source vidéo, arrêter d'émettre des trames vidéo depuis ladite mémoire à structure FIFO vers ledit utilisateur particulier et pour commuter ledit utilisateur particulier sur une ressource de multidiffusion unique qui diffuse ledit flux vidéo particulier vers plusieurs utilisateurs.

2. Agent de zapping selon la revendication 1, ***caractérisé en ce que*** ladite unité de zapping fait partie d'un multiplexeur d'accès (12).

3. Agent de zapping selon la revendication 1, ***caractérisé en ce que*** ladite unité de zapping fait partie d'un serveur vidéo (11).

4. Procédé d'émission de contenu vidéo comprenant les étapes suivantes :
- réception d'une demande (zap_chn) de la part d'un utilisateur particulier (usrX) par laquelle un flux vidéo particulier (VSn) est demandé,
- réception de trames vidéo dudit flux vidéo particulier (I1, B1, B2, P1, B3, B4, P2, B5, B6, P3, I2, B7, B8, etc.) depuis une source vidéo (ENCn),
- mise en réserve, dans une mémoire à structure FIFO (113), d'une première trame d'ancrage (11) et de trames delta supplémentaires (B1, B2, P1, B3, B4, P2, B5, B6, P3) d'un premier groupe d'images (GoP₁) dudit flux vidéo particulier,
- sur réception de ladite demande, émission d'une pluralité de trames vidéo (I1, B1, B2, P1, B3) depuis ladite mémoire à structure FIFO en direction dudit utilisateur particulier, ladite pluralité de trames vidéo comprenant ladite première trame d'ancrage en tant que premier élément émis et au moins une trame delta supplémentaire (B1, B2, P1, B3),
***caractérisé en ce que*** ledit procédé comprend en outre l'étape pour, là-dessus, lorsqu'une deuxième trame d'ancrage (I2) d'un deuxième groupe d'images (GoP₁₊₁) dudit flux vidéo particulier postérieurement contigu audit premier groupe d'images a été reçue de ladite source vidéo, arrêter l'émission des trames vidéo depuis ladite mémoire à structure FIFO vers ledit utilisateur particulier et commutation dudit utilisateur particulier sur une ressource de multidiffusion unique qui diffuse ledit flux vidéo particulier vers plusieurs utilisateurs.
